Europäisches Patentamt

European Patent Office

Office européen des brevets

(11) Veröffentlichungsnummer: **0 365 751**
**A2**

## (12) EUROPÄISCHE PATENTANMELDUNG

(21) Anmeldenummer: 89112072.7

(51) Int. Cl.⁵: **D01G 27/00 , B65G 37/00**

(22) Anmeldetag: **01.07.89**

(30) Priorität: 25.10.88 DE 3836245

(43) Veröffentlichungstag der Anmeldung:
02.05.90 Patentblatt 90/18

(84) Benannte Vertragsstaaten:
**CH DE FR IT LI**

(71) Anmelder: **Zinser Textilmaschinen GmbH
Hans-Zinser-Strasse Postfach 1480
D-7333 Ebersbach/Fils(DE)**

(72) Erfinder: **Block, Karl-Heinz, Dipl.-Ing.
Schwarenbergstrasse 145
D-7000 Stuttgart 1(DE)**

(74) Vertreter: **Wilhelm & Dauster Patentanwälte
European Patent Attorneys
Hospitalstrasse 8
D-7000 Stuttgart 1(DE)**

(54) **Transportvorrichtung zum automatischen Transportieren von Wickeln zu mehreren Kämmmaschinen.**

(57) Bei einer Transportvorrichtung zum automatischen Transportieren von auf Hülsen gewickelten Wickeln von wenigstens einer Vorbereitungsmaschine zu mehreren Kämmaschinen mit einer einen Fahrmotor aufweisenden Laufkatze und mit einer an der Laufkatze mittels einer einen Hubmotor enthaltenden Hubeinrichtung gehaltenen Greifeinrichtung wird vorgesehen, daß die Greifeinrichtung zum Aufnehmen eines Wickels einer Bereithaltestelle mit mehreren, hintereinander angeordneten Wickeln und Vorratsaufnahmen der Kämmaschinen zustellbar ist, wobei die Greifeinrichtung mit einem das Überfahren eines an der Bereithaltestelle befindlichen Wickels erkennenden Sensor ausgerüstet ist, der als Signalgeber an eine die Greifeinrichtung durch Ansteuern des Fahrmotors der Laufkatze über die Mitte des erkannten Wickels positionierende Auswerteeinrichtung angeschlossen ist.

Fig. 2

## Transportvorrichtung zum automatischen Transportieren von Wickeln zu mehreren Kämmaschinen

Die Erfindung betrifft eine Transportvorrichtung zum automatischen Transportieren von auf Hülsen aufgewickelten Wickeln von wenigstens einer Vorbereitungsmaschine zu mehreren Kämmaschinen mit einer einen Fahrmotor aufweisenden Laufkatze, die auf einer Kranbrücke verfahrbar ist, und mit einer an der Laufkatze mittels einer einen Hubmotor enthaltenden Hubeinrichtung gehaltenen, der Hülse eines Wickels zustellbare Greifelemente aufweisenden Greifeinrichtung, die durch Verfahren der Kranbrücke und der Laufkatze und Betätigen der Hubeinrichtung einer Bereithaltestelle für Wickel und Vorratsaufnahmen der Kämmaschinen zustellbar ist.

Der Erfindung liegt die Aufgabe zugrunde, eine Transportvorrichtung der eingangs genannten Art so auszubilden, daß einerseits ein ausreichender Vorrat an vollen Wickeln an der Bereithaltestelle bereitstellbar ist, während andererseits eine sichere und exakte Aufnahme der Wickel durch die Greifeinrichtung möglich ist.

Diese Aufgabe wird dadurch gelöst, daß die Bereithaltestelle als eine Aufnahme für mehrere, in einer Reihe hintereinander anzuordnende Wickel ausgebildet ist, daß die Laufkatze auf der über die Bereithaltestelle positionierbaren Kranbrücke entlang der Aufnahme verfahrbar ist, und daß die Greifeinrichtung mit einem das Überfahren eines Wickels erkennenden Sensor ausgerüstet ist, der als Signalgeber an eine die Greifeinrichtung durch Ansteuern des Fahrmotors der Laufkatze über die Mitte des erkannten Wickels positionierende Auswerteeinrichtung angeschlossen ist.

Dadurch ist es möglich, einerseits mehrere Wickel an einer Bereithaltestelle auf Vorrat zu halten, während andererseits die Greifeinrichtung selbst in der Lage ist, einen bereitgehaltenen Wickel zu finden und sich exakt zu ihm zu positionieren. Es ist deshalb nicht notwendig, daß die Bereithalteeinrichtung in irgendeiner Form mit der Greifeinrichtung verbunden ist, durch welche Signale über die Position übermittelt werden könnten, wo ein Wickel bereitgehalten ist. Vielmehr ist die Greifeinrichtung selbst in der Lage, sich ohne über Signalleitungen mit der Bereithalteeinrichtung verbunden zu sein, einen Wickel zu suchen und aufzunehmen.

In weiterer Ausgestaltung der Erfindung wird vorgesehen, daß die Greifeinrichtung mit einem beim Absenken eine Hülse, auf die der Wickel aufgewickelt ist, erkennenden Sensor ausgerüstet ist, der als Signalgeber an eine durch Ansteuern des Hubmotors Greifelemente der Greifeinrichtung in die Hülsenmitte positionierende Auswerteeinrichtung angeschlossen ist. Dadurch ist es möglich, voll automatisch auch Wickel unterschiedlicher Durchmesser an der Bereithaltestelle aufzunehmen. Dadurch wird dem Umstand Rechnung getragen, daß einer oder mehrere Wickel nicht bis zu dem vollen Durchmesser gewickelt wurden, beispielsweise aufgrund einer Störung durch Materialauslauf o.dgl. an einer Vorbereitungsmaschine. Die Greifeinrichtung ist in der Lage, sich trotz unterschiedlicher Durchmesser vollautomatisch auf die Hülsenmitte zu positionieren, so daß eine Aufnahme ohne die Gefahr einer Beschädigung der Wickel durchgeführt werden kann.

In weiterer Ausgestaltung der Erfindung wird vorgesehen, daß die Auswerteeinrichtung die zum Erreichen der Hülsenmitte angefahrene Position des Hubmotors mit einem vorgegebenen, abgelegten Wert vergleicht, die Differenz speichert und diese beim Ab legen des Wickels an einer Vorratsaufnahme einer Kämmaschine zu der auf einen vorgegebenen Wert ausgelegten Absenkstellung des Hubmotors addiert. Dadurch wird sichergestellt, daß auch ein Wickel mit kleinerem Durchmesser sicher an der Kämmaschine abgelegt und nicht etwa einfach fallengelassen wird.

Weitere Merkmale und Vorteile der Erfindung ergeben sich aus der nachfolgenden Beschreibung der in den Zeichnungen dargestellten Ausführungsformen.

Fig. 1 zeigt eine schematische Draufsicht auf eine erfindungsgemäße Transportvorrichtung, mit der volle Wickel von einer Bereithaltestelle vollautomatisch zu mehreren Kämmaschinen transportierbar ist und

Fig. 2 einen Schnitt entlang der Linie II-II, während sich die Greifeinrichtung oberhalb eines an der Bereithaltestelle vorhandenen Wickels befindet und sich auf diesen zubewegt.

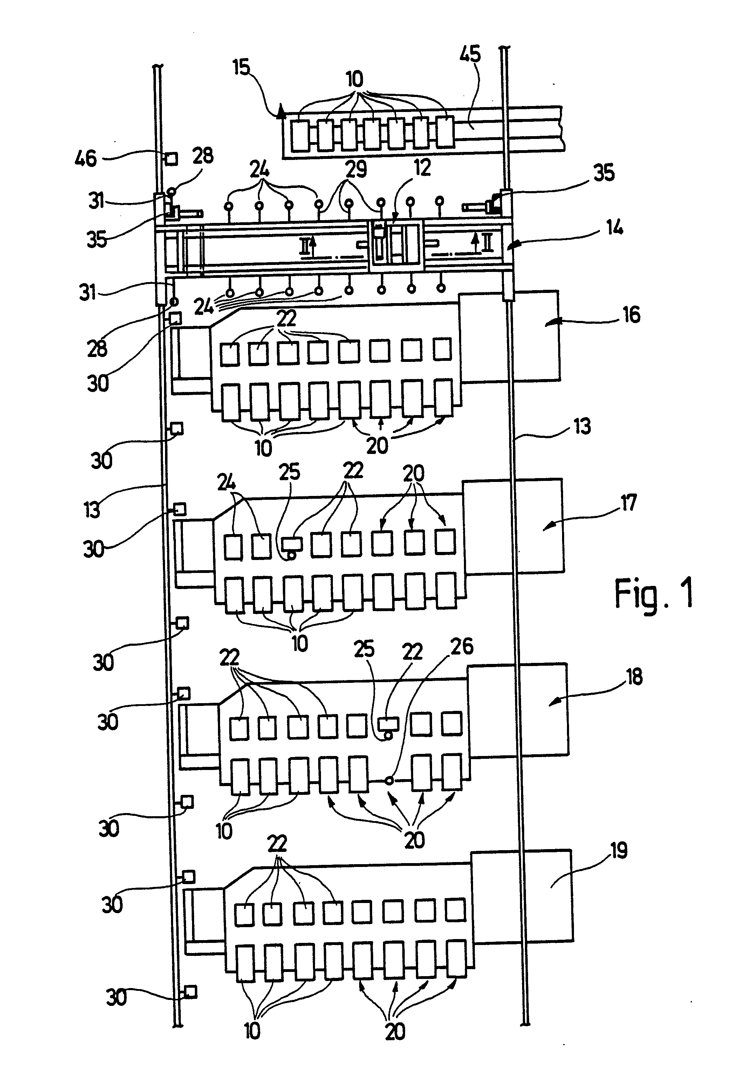

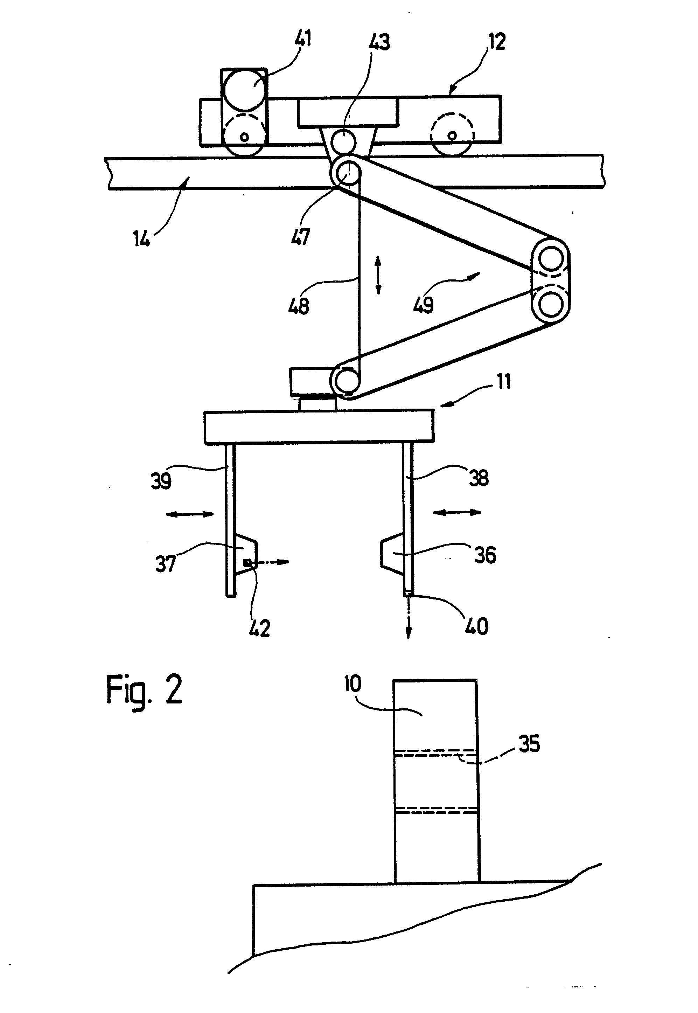

Auf einer in Fig.1 dargestellten Kranbahn (13) fährt eine Kranbrücke (14), auf der eine verfahrbare Laufkatze (12) angeordnet ist. An der Laufkatze (12) ist eine Greifeinrichtung (11) aufgehängt (Fig.2). In den Bereich unterhalb der Kranbahn (13), über welchen die Kranbrücke (14) verfährt, ragt eine Bereithaltestelle (15) für Wickel (10) hinein. Diese Bereithaltestelle (15) enthält ein von einer nicht dargestellten Vorbereitungsmaschine, insbesondere einer Wickelstrecke, kommendes Transportband (45), auf welchem die Wickel (10) derart angeordnet sind, daß die Wickelhülsen (35) in Längsrichtung des Transportbandes (45) verlaufen. Die Wickel (10) sind in Laufrichtung des Transportbandes (45) in einem Abstand zueinander angeordnet, der ausreicht, um die Greifeinrichtung (11) den Wickeln (10) zuzustellen (Fig.2).

Innerhalb des von der Kranbrücke (14) überfahrbaren Bereiches sind mehrere Kämmaschinen (16, 17, 18, 19) hintereinander angeordnet. Die Kämmaschinen (16, 17, 18, 19) weisen jeweils mehrere Arbeitsstellen (20) auf, die in einer quer zur Kranbahn (13) und damit in Längsrichtung der Kranbrücke (14) verlaufenden Reihe angeordnet sind. Jede Arbeitsstelle (20) enthält eine Arbeitsaufnahme, auf welcher sich ein Wickel (22) befindet, der gerade abgearbeitet wird. Außerdem enthält jede Arbeitsstelle (20) eine Vorratsaufnahme, in die Wickel (10) auf Vorrat abgelegt werden, die bei Bedarf von einer Bedienungsperson an die Arbeitsaufnahme übergeben werden.

Nach Aufnahme eines Wickels (10) an der Bereithaltestelle (15) führt die Kranbrücke (14) Überwachungsfahrten entlang der Kranbahn (13) durch. Sie ist mit Mitteln ausgerüstet, die es ihr erlauben, die Arbeitsstelle (20) einer Kämmaschine (bei Fig.1 der Kämmaschine 18), aufzufinden, an der ein Bedarf an einem vollen Wickel (10) besteht, der dann dort abgelegt wird. Diese Einrichtungen sind in der gleichzeitig eingereichten deutschen Patentanmeldung P .. .. ... (internes Aktenzeichen P 8532) erläutert.

Zum Aufnehmen eines neuen Wickels (10) an der Bereithaltestelle (15) wird die Kranbrücke (14) über die Bereithaltestelle (15) gefahren. Die Kranbrücke (14) ist mit einem Detektor (28) ausgerüstet, dem ein an der Kranbahn (13) angebrachtes detektierbares Element (46) zugeordnet ist. Dieses detektierbare Element (46) ist exakt zu der Bereithaltestelle (15) ausgerichtet, so daß durch eine entsprechende Signalgabe an die Fahrwerksmotoren (35) der Kranbrücke (14) diese exakt über dem Transportband (45) der Bereithaltestelle (15) positioniert wird. Die Laufkatze (12), die vorher zweckmäßigerweise in einen Endbereich der Kranbrücke (14) verfahren wird, der außerhalb der Bereithaltestelle (15) liegt (in Fig.1 zur linken Seite), von der aus sie dann in Längsrichtung des Transportbandes (45) der Bereithaltestelle (15) verfahren wird.

Die Greifeinrichtung (11), die zwei horizontal mittels eines beispielsweise pneumatischen Antriebs verschiebbare Greifelemente (38, 39) aufweist, von denen jeder mit einem Konus (36, 37) versehen ist, ist mittels einer Hubeinrichtung an der Laufkatze (12) befestigt. Die Hubeinrichtung enthält einen Hubmotor (43), der ein Kettenrad (47) antreibt, das seinerseits eine Kette (48) entsprechend anhebt oder absenkt. Zwischen der Laufkatze (12) und der Greifeinrichtung (11) ist außerdem noch ein Ausgleichshebelsystem (49) vorgesehen, durch welches die Greifeinrichtung (11) immer in einer exakt horizontalen Position gehalten wird.

Das Greifelement (38) ist mit einem Sensor (40), insbesondere einer auf hell-dunkel ansprechenden Lichtsonde, ausgerüstet, die nach unten gerichtet ist. Wenn die Laufkatze (12) auf der Kranbrücke (14) in Längsrichtung des Transportbandes (45) der Bereithaltestelle (15) verfährt, so erfaßt die Lichtsonde (40) den ersten Wickel (10), sobald sie die Kante eines Wickels (10) erreicht. Das mit der Lichtsonde (40) gewonnene Signal wird zu einem Stoppsignal für den Fahrmotor (41) der Laufkatze (12) ausgewertet. Der Fahrmotor (41) wird dann um einen in der Steuerung vorgespeicherten Wert weiterverfahren, der dem Abstand der Lichtsonde (40) zur Mitte der Greifeinrichtung (11) zuzüglich der Hälfte der Breite des Wickels (10) entspricht, so daß dann die Greifeinrichtung (11) exakt mittig über dem Wickel (10) positioniert ist. Bei diesem Verfahren der Laufkatze (12) entlang des Transportbandes (45) kann sich die Greifeinrichtung (11) in der völlig angehobenen Position befinden. Zweckmäßiger ist es jedoch, wenn die Greifeinrichtung (11) bereits vorher in den Bereich abgesenkt wird, in welchem sich die Wickel (10) befinden, wie das bei dem Ausführungsbeispiel nach Fig.2 dargestellt ist.

Wenn die Greifeinrichtung (11) nach Auffinden eines Wickels (10) exakt über diesem positioniert worden ist, so wird die Greifeinrichtung (11) weiter über den Hubmotor (43) abgesenkt. In dem Konus (37) des Greifelementes (39) ist ein weiterer Sensor, vorzugsweise ebenfalls in Form einer auf hell-dunkel ansprechenden Fotosonde, angeordnet. Dieser Sensor (42) erfaßt, wann der Konus (37) (und damit auch der Konus 36) die Oberkante des Wickels (10) überlaufen, wodurch ein Hell-Signal gegeben wird. Sobald der Sensor (42) in den Bereich der Hülse (35) gelangt, erlischt dieses Hell-Signal und wird durch ein Dunkel-Signal ersetzt, das der Lage des Randes der Bohrung der Hülse (35) signalisiert. Dieses Signal wird ausgewertet, um den Hubmotor (43) zu stoppen und dann anschließend um einen vorgegebenen Betrag weiter abzusenken, der an die Abmessung der Hülsenbohrung und der Koni (37, 36) angepaßt ist. Wenigstens der Konus (37) ist als ein offener Ring ausgebildet, in dessen Innerem der Sensor (42) angeordnet ist. Nach Erreichen dieser Endposition wird die Greifeinrichtung (11) durch ein Aufeinanderzubewegen der Greifelemente (38, 39) geschlossen, so daß anschließend durch Betätigen des Hubmotors (43) der Wickel (10) mitgenommen wird. Dieser Wickel (10) wird dann an eine Vorratsaufnahme einer der Kämmaschinen (16, 17, 18, 19) abgegeben, die bei einer Überwachungsfahrt der Kranbrücke (14) aufgefunden wird.

Die Position des Hubmotors (43), die dieser zum Aufnehmen der Hülse mittels der Koni (36, 37) eingenommen hatte, wird mit einem vorgegebenen Wert verglichen und die Differenz gebildet. Diese Differenz wird dann in die Steuerung des Hubmotors (43) beim Absenken der Greifeinrichtung (11) zu einer der Vorratsaufnahmen der Kämmaschinen (16, 17, 18, 19) zu einem für diese Absenkbewegung festgelegten Normalwert addiert, so daß ein Wickel (10) an der Kämmaschine auch dann exakt und ohne Fallenlassen abgelegt wird, wenn der Wickel (10) in der Vorbereitungsmaschine nicht die normale, volle Wickelgröße erhalten hatte.

**Ansprüche**

1. Transportvorrichtung zum automatischen Transportieren von auf Hülsen gewickelten Wickeln, von wenigstens einer Vorbereitungsmaschine zu mehreren Kämmaschinen, mit einer einen Fahrmotor aufweisenden Laufkatze, die auf einer Kranbrücke verfahrbar ist, und mit einer an der Laufkatze mittels einer einen Hubmotor enthaltenden Hubeinrichtung gehaltenen, der Hülse eines Wickels zustellbare Greifelement aufweisenden Greifeinrichtung, die durch Verfahren der Kranbrücke und der Laufkatze und Betätigen der Hubeinrichtung einer Bereithaltestelle für Wickel und Vorratsaufnahmen der Kämmaschinen zustellbar ist, dadurch gekennzeichnet, daß die Bereithaltestelle (15) als eine Aufnahme für mehrere, in einer Reihe hintereinander anzuordnende Wickel (10) ausgebildet ist, daß die Laufkatze (12) auf der über die Bereithaltestelle (15) positionierbaren Kranbrücke (14) entlang der Aufnahme verfahrbar ist, und daß die Greifeinrichtung (11) mit einem das Überfahren eines Wickels (10) erkennenden Sensor (40) ausgerüstet ist, der als Signalgeber an eine die Greifeinrichtung (11) durch Ansteuern des Fahrmotors (41) der Laufkatze (12) über der Mitte des erkannten Wickels (10) positionierende Auswerteeinrichtung angeschlossen ist.

2. Transportvorrichtung nach Anspruch 1, dadurch gekennzeichnet, daß die Greifeinrichtung (11) mit einem beim Absenken eine Hülse (35), auf die der Wickel (10) aufgewickelt ist, erkennenden Sensor (42) ausgerüstet ist, der als Signalgeber an eine durch Ansteuern des Hubmotors (43) die Greifelemente (36, 38; 37, 39) in die Hülsenmitte positionierende Auswerteeinrichtung angeschlossen ist.

3. Transportvorrichtung nach Anspruch 2, dadurch gekennzeichnet, daß die Auswerteeinrichtung die bei Erreichen der Hülsenmitte angefahrene Position des Hubmotors (43) mit einem vorgegebenen, abgelegten Wert vergleicht, die Differenz speichert und diese Differenz beim Ablegen des Wickels (10) an einer Vorratsaufnahme einer Kämmaschine (16, 17, 18, 19) der auf einen vorgegebenen Wert ausgelegten Absenkstellung des Hubmotors (43) addiert.

4. Transportvorrichtung nach einem der Ansprüche 1 bis 3, dadurch gekennzeichnet, daß als Sensoren (40, 42) auf hell-dunkel ansprechende Lichtsonden vorgesehen sind.

5. Transportvorrichtung nach einem der Ansprüche 1 bis 4, dadurch gekennzeichnet, daß der das Überfahren eines Wickels (10) erkennende Sensor (40) am unteren Ende eines Greifelementes (38) der Greifeinrichtung (11) angebracht ist.

6. Transportvorrichtung nach einem der Ansprüche 1 bis 5, dadurch gekennzeichnet, daß jedes Greifelement (38, 39) der Greifeinrichtung (11) mit einem in eine Hülse (35) eines Wikkels (10) einführbaren Konus (36, 37) versehen ist, von denen einer mit dem die Hülse (35) erkennenden Sensor (42) ausgerüstet ist.

Fig. 1

Fig. 2